# EUROPÄISCHE PATENTANMELDUNG

(11) **EP 2 506 100 A2**
(43) Veröffentlichungstag der Anmeldung: **03.10.2012**
(21) Anmeldenummer: 12159165.5
(22) Anmeldetag: 13.03.2012
(51) Int. Cl.: G05B 19/042

(54) **Schnittstellenmodul für ein modulares Steuerungsgerät**

(30) Priorität: 01.04.2011 DE 102011006668
(71) Anmelder: Siemens Aktiengesellschaft, 80333 München (DE)
(72) Erfinder: Köpke, Andreas, 91052 Erlangen (DE)

(57) **Zusammenfassung**

Die vorliegende Erfindung beschreibt ein Schnittstellenmodul (20) für ein modulares Steuerungsgerät (10), wobei das Schnittstellenmodul (20) umfasst:
- Eine Rückwandbus-Schnittstelle (22) zur Verbindung mit einem Rückwandbus (12) des modularen Steuerungsgeräts (10) zur Kommunikation innerhalb des modularen Steuerungsgeräts (10),
- eine erste Kommunikations-Schnittstelle (21) zum Anschluss an ein erstes Kommunikationsnetz (40), und
- eine Sicherheits-Einrichtung (26) zur Überwachung einer ersten Kommunikation zwischen der ersten Kommunikations-Schnittstelle (21) und der Rückwandbus-Schnittstelle (22),
- wobei das Schnittstellenmodul (20) weiterhin umfasst:
- eine zweite Kommunikations-Schnittstelle (23) zur Kommunikation mit einer zur Kommunikation mit dem modularen Steuerungsgerät (10) vorgesehenen Steuerungseinheit (31),
- und wobei weiterhin die Sicherheits-Einrichtung
- zur Überwachung einer zweiten Kommunikation zwischen der zweiten Kommunikations-Schnittstelle (23) und der Rückwandbus-Schnittstelle (22),
und/oder
- zur Überwachung einer dritten Kommunikation zwischen der ersten (21) und der zweiten Kommunikations-Schnittstelle (23) eingerichtet und ausgebildet ist.

## Beschreibung

Die vorliegende Erfindung betrifft ein Schnittstellenmodul für ein modulares Steuerungsgerät mit
- einer Rückwandbus-Schnittstelle zur Verbindung mit einem Rückwandbus des modularen Steuerungsgeräts zur Kommunikation innerhalb des modularen Steuerungsgeräts,
- einer ersten Kommunikations-Schnittstelle zum Anschluss eines ersten Kommunikations-Netzes, und
- einer Sicherheits-Einrichtung zur Überwachung einer ersten Kommunikation zwischen der ersten Kommunikations-Schnittstelle und der Rückwandbus-Schnittstelle.

Derartige Schnittstellenmodule für modulare Steuerungsgeräte sind beispielsweise aus dem US-Patent US 7,853,677 B2 bekannt. Hierin werden Sicherheitsmodule bzw. entsprechende Netzwerk-Module für eine modulare Steuerungseinheit (PLC) zur Ankopplung an einen Rückwandbus der PLC offenbart, welche eine so genannte "Firewall" umfassen, mit welchen die Kommunikation eines externen Rechners mit der PLC überwacht werden kann. Mittlerweile werden allerdings auch häufiger Geräte über eine solche PLC gesteuert, die beispielsweise eigene Kommunikationsfähigkeiten aufweisen oder in kleinere oder größere Kommunikations-Automatisierungsnetze eingebunden sind. Die vielfältigen Kommunikationsmöglichkeiten innerhalb solcher Systeme und/oder solcher Systeme mit externen Netzkomponenten oder Geräten können allerdings mit den genannten Schnittstellen- und/oder Sicherheitsmodulen beispielsweise nur relativ unflexibel und/oder ungenügend geschützt werden.

Daher ist es eine Aufgabe der vorliegenden Erfindung, die Kommunikation innerhalb eines Steuerungssystems oder zu externen Geräten flexibler und/oder besser zu schützen.

Die vorliegende Aufgabe wird gelöst durch ein Schnittstellenmodul für ein modulares Steuerungsgerät mit den Merkmalen des Patentanspruchs 1.

Ein solches Schnittstellenmodul umfasst
- eine Rückwandbus-Schnittstelle zur Verbindung mit einem Rückwandbus des modularen Steuerungsgeräts zur Kommunikation innerhalb des modularen Steuerungsgeräts,
- eine erste Kommunikations-Schnittstelle zum Anschluss an ein erstes Kommunikations-Netz, und
- eine Sicherheits-Einrichtung zur Überwachung einer ersten Kommunikation zwischen der ersten Kommunikations-Schnittstelle und der Rückwandbus-Schnittstelle.

Das Schnittstellenmodul umfasst weiterhin eine zweite Kommunikations-Schnittstelle zur Kommunikation mit einer zur Kommunikation mit dem modularen Steuerungsgerät vorgesehenen Steuerungseinheit,
wobei die Sicherheits-Einrichtung weiterhin zur Überwachung
einer zweiten Kommunikation zwischen der zweiten Kommunikations-Schnittstelle und der Rückwandbus-Schnittstelle, und/oder zur Überwachung einer dritten Kommunikation zwischen der ersten und der zweiten Kommunikations-Schnittstelle eingerichtet und ausgebildet ist.

Ein solches Schnittstellenmodul kann beispielsweise neben der Kommunikation mit einem beispielsweise an das erste Kommunikationsnetz angeschlossenen Rechner mit dem modularen Steuerungsgerät auch die Kommunikation zwischen beispielsweise diesem Rechner und einer Steuerungseinheit für das modulare Steuerungsgerät, welche mit der zweite Kommunikations-Schnittstelle am Schnittstellenmodul verbunden ist, überwacht werden. Alternativ kann beispielsweise stattdessen auch eine Kommunikation des modularen Steuerungsgeräts mit der genannten Steuerungseinheit überwacht werden. Weiterhin können auch alle drei der vorstehend genannten Kommunikationsmöglichkeiten überwacht werden.

Auf diese Weise können flexibel verschiedenste Kommunikationspfade innerhalb der genannten Netze kontrolliert und überwacht werden und so flexibler auf die Bedürfnisse und Kommunikationsmöglichkeiten der involvierten Geräte reagiert werden.

Ein modulares Steuerungsgerät kann beispielsweise ein Steuerungsgerät zum Steuern und Regeln von Anlagen, Maschinen, Geräten oder Ähnlichem sein, welches die Möglichkeit aufweist, ein oder mehrere Zusatz- oder Funktionsmodule aufzunehmen, um die Funktionalität des Steuerungsgerät herzustellen oder zu erweitern. Solche Funktionsmodule können beispielsweise Ein-Ausgabe-Module, Stromversorgungs-Module, Kommunikations-Module, oder auch ein zentrales Steuerungsmodul (CPU) für eine solche modulare Steuerung sein. Dabei können zu steuernde Anlagen oder Geräte beispielsweise mit Ein- Ausgabe-Modulen, Schnittstellen-Modulen oder auch einem zentralen Steuerungsmodul verbunden sein. Weiterhin kann ein zentrales Steuerungsmodul z.B. auch ein fester Bestandteil des modularen Steuerungsgeräts sein. Beispiele für solche modularen Steuerungsgeräte bzw. -systeme sind z. B. die so genannten S7-Steuerungen von Siemens oder entsprechende vergleichbare modulare Steuerungssysteme von Firmen wie Rockwell, Mitsubishi, Yokogawa, Schneider Electric oder ähnlichen Firmen.

Das Schnittstellenmodul kann weiterhin beispielsweise einen Mikroprozessor, insbesondere einen Mehrkern-Mikroprozessor und/oder ein Echtzeit-Betriebssystem aufweisen. Auf diese Weise kann das Schnittstellenmodul beispielsweise die erhöhten Anforderungen erfüllen, die durch eine Sicherheits-Einrichtung im Schnittstellenmodul gemäß der vorliegenden Beschreibung an beispielsweise die Rechenleistung oder Datenverarbeitungseigenschaften des Schnittstellenmodul gestellt werden.

Ein Rückwandbus kann jeder zur Kommunikation innerhalb des modularen Steuerungsgeräts geeignete serielle und/oder parallele Bus sein. Insbesondere ist der Rückwandbus zur Kommunikation zwischen einzelnen Modulen des modularen Steuerungsgeräts und/oder einem oder mehreren solcher Module mit einem zentralen Steuerungsmodul eingerichtet und ausgerichtet. Die Module des modularen Steuerungsgeräts können dabei insbesondere lösbar am Steuerungsgerät befestigt sein, wobei bei befestigtem Modul dieses zu Kommunikation über den Rückwandbus mit diesem verbunden ist. Insbesondere kann der Rückwandbus zur Kommunikation von Modulen des modularen Steuerungsgeräts mit einem zentralen Steuerungsmodul (CPU) des modularen Steuerungsgeräts ausgebildet und eingerichtet sein. Weiterhin kann der Rückwandbus beispielsweise eine Echtzeit-Kommunikation über den Rückwandbus ermöglichen. Beispiele für solche Rückwandbus-System sind der Rückwandbus, welcher bei modularen S7-Steuerungen der Siemens AG verwendet werden oder bei vergleichbaren modularen Steuerungen, beispielsweise der Firmen Schneider Electric, Rockwell, Mitsubishi, Yokogawa, Vipa oder ähnlichen Firmen.

Die Rückwandbus-Schnittstelle des Schnittstellenmoduls kann beispielsweise zur Kommunikation mit einem zentralen Steuerungsmodul (CPU) des modularen Steuerungsgeräts und/oder auch mit weiteren Modulen des modularen Steuerungsgeräts ausgebildet und eingerichtet sein. Insbesondere kann die Rückwandbus-Schnittstelle beispielsweise ein Verbindungselement zur Verbindung mit einem entsprechenden Gegen-Verbindungselement des Rückwandbusses umfassen.

Das Schnittstellenmodul kann beispielsweise lösbar mit dem Rückwandbus des modularen Steuerungsgeräts verbindbar sein. Auch die weiteren Module des modularen Steuerungsgeräts können lösbar mit dem modularen Steuerungsgerät verbindbar sein. Insbesondere können die Module des modularen Steuerungsgeräts lösbar mit dem Rückwandbus verbindbar oder verbunden sein.

Die erste Kommunikations-Schnittstelle kann beispielsweise als Schnittstelle zur Verbindung mit kabelgebundenen oder kabellosen Kommunikations-Netzen ausgebildet und eingerichtet sein. Insbesondere kann die Kommunikations-Schnittstelle dafür entsprechende Verbindungs- oder Steckverbindungs-Elemente oder auch Antennen für Drahtlosnetze oder Ähnliches umfassen. Die Kommunikations-Schnittstelle kann beispielsweise zur Verbindung mit einem Ethernet-Netzwerk oder einem entsprechenden sogenannten "Office-Netz" ausgebildet und eingerichtet sein. Ein solches Netz kann beispielsweise als so genanntes "Local Area Network (LAN)" oder auch "Wide Area Network (WAN)" oder auch Internet ausgebildet und eingerichtet sein bzw. an ein solches Netz angeschlossen sein.

Über das erste Kommunikations-Netz kann beispielsweise eine externe Kommunikations-Einrichtung wie beispielsweise ein Rechner, ein PC, ein Computer, ein Kommunikationsendgerät, ein mobiles Kommunikationsgerät oder Ähnliches mit dem Schnittstellen-Modul und dann weiter mit dem modularen Steuerungsgerät verbunden werden oder sein.

Unter der Überwachung einer Kommunikation wird in der vorliegenden Beschreibung eine Prüfung mindestens eines Kommunikations-Elements im Rahmen dieser Kommunikation gemäß einer oder mehrerer vorgegebener oder vorgebbarer Regeln bezeichnet. Dabei kann dann beispielsweise anhand solcher Regeln entschieden werden, ob entsprechend der Regeln geprüfte Kommunikationselemente, Kommunikations-Nachrichten und/oder Kommunikationsdaten blockiert werden müssen oder weitergeleitet werden können.

Beispielsweise kann im Rahmen einer solchen Überwachung die Prüfung von zu übertragenden Nutzdaten im Rahmen einer solchen Kommunikation auf Zulässigkeit und/oder Unzulässigkeit geprüft werden (vergleichbar z.B. mit der Funktionalität einer so genannten "Application Layer Firewall". Weiterhin können beispielsweise im Rahmen einer solchen Überwachung auch Adressen und/oder Absender (z. B. auf verschiedenen so genannten OSI-Schichten) geprüft werden.

Weiterhin kann auch eine Prüfung anhand einer höchsten involvierten OSI-Schicht (entsprechend des sogenannten "OSI-Schichtmodells) erfolgen. Dabei kann z.B. eine Regel vorgeben sein, dass eine Layer-2-Kommunikation zulässig ist, eine Kommunikation, bei welcher Layer-3 oder höhere Kommunikationsschichten involviert sind aber nicht. Weiterhin kann die Überprüfung auf bestimmte verwendete Kommunikations-Protokolle erfolgen.

Zudem kann die Überprüfung auch Regeln über die Zulässigkeit bestimmter Sende- und/oder Empfangsadressen oder auch bestimmter Benutzer als Sender und/oder Empfänger umfassen. Dabei kann die Überwachung der Kommunikation bzw. die Sicherheits-Einrichtung beispielsweise auch eine Authentifizierung eines Benutzers umfassen.

Wenn in der vorliegenden Beschreibung ganz allgemein eine Kommunikation zwischen einer ersten und einer zweiten Schnittstelle erwähnt wird, so kann darunter sowohl eine Kommunikation von der ersten zur zweiten Schnittstelle, als auch eine Kommunikation von der zweiten zur ersten Schnittstelle, als auch eine Kommunikation bei welcher beide Kommunikationsrichtungen auftreten können, verstanden werden.

Die zweite Kommunikations-Schnittstelle kann beispielsweise ebenfalls zum Anschluss verschiedener drahtlos und drahtgebundener Netzwerke ausgebildet und eingerichtet sein. Insbesondere kann die zweite Kommunikations-Schnittstelle zur Verbindung mit für den industriellen Einsatz vorgesehenen und eingerichteten drahtgebundenen und Drahtlos-Netzwerken ausgebildet und eingerichtet sein. So kann die zweite Kommunikations-Schnittstelle beispielsweise zum Anschluss an ein Ethernet, ein industrielles Ethernet, ein WLAN, ein industrielles WLAN, ein HART-Netz, ein WirelessHART-Netz und/oder an ein Feldbus-System, wie z. B. ein Profinet-Netz, ein Profibus-Netz oder vergleichbare Netze, ausgebildet und eingerichtet sein.

Zur Kommunikation mit dem modularen Steuerungsgerät vorgesehene Steuerungseinheiten können beispielsweise zum Empfang, der Verarbeitung, der Umsetzung und/oder zur Weiterleitung von Steuersignalen vom modularen Steuerungsgerät ausgebildet und eingerichtet sein. Eine solche Steuerungseinheit kann beispielsweise auch zur Bedienung des modularen Steuerungsgeräts und/oder zur Anzeige von Daten vom modularen Steuerungsgerät eingerichtet und ausgebildet sein.

Zur Kommunikation mit dem modularen Steuerungsgerät vorgesehene Steuerungseinheiten können beispielsweise auch verschiedenste vom modularen Steuerungssystem gesteuerte Geräte, Maschinen oder Anlagen sein bzw. entsprechende Maschinen- Geräte- oder Anlagenteile bzw. -elemente. Weiterhin können solche Steuerungseinheiten beispielsweise auch ausgelagerte bzw. entfernt befindliche Teile des Steuerungssystems sein (z.B. eine so genannte "dezentrale Peripherie"). Steuerungseinheit können auch als Bedienungs- und/oder Anzeigeelemente oder - geräte für das modulare Steuerungssystem (z. B. spezielle Bedien- und/oder Anzeigegeräte oder auch entsprechende PCs oder Rechner) ausgebildet und eingerichtet sein.

Mehrere Steuerungseinheiten können beispielsweise über ein Kommunikationsnetz, wie z.B. eines der die vorstehend genannten industriellen drahtgebundenen, Drahtlos- und/oder Feldbus-Netze, zu einem so genannten "Automatisierungsnetz" verbunden sein, welches dann z.B. mit dem Schnittstellenmodul über die zweite Kommunikations-Schnittstelle gekoppelt sein kann.

Die Kommunikation mit einer Steuerungseinheit kann beispielsweise ein Senden von Daten an die Steuerungseinheit, ein Empfangen von Daten von der Steuerungseinheit oder auch eine Kommunikation in beiden Richtungen umfassen. Dabei können eine oder mehrere Steuerungseinheiten mit der zweiten Kommunikationsschnittstelle verbunden oder verbindbar sein, z.B. über ein wie vorstehend erläutert ausgebildetes "Automatisierungsnetz".

Die Überwachung der zweiten Kommunikation kann beispielsweise eine Überwachung von Kommunikationsdaten umfassen, die von der zweiten Kommunikations-Schnittstelle zur Rückwandbus-Schnittstelle übertragen werden sollen oder umgekehrt oder auch in beide Richtungen. Entsprechend kann die Überwachung der dritten Kommunikation Kommunikations-Daten umfassen, welche von der ersten an die zweite Kommunikations-Schnittstelle gesendet werden sollen oder umgekehrt oder auch in beide Richtungen.

In einer bevorzugten Ausgestaltung kann das Schnittstellenmodul eine Speichereinrichtung umfassen. Insbesondere kann die Speichereinrichtung zur Speicherung von Regeln zur Überwachung der ersten, der zweiten und/oder der dritten Kommunikation und/oder Regeln zur Prüfung jedweder anfallender Kommunikation durch das Schnittstellenmodul vorgesehen sein.

Weiterhin kann vorgesehen sein, dass erste Regeln zur Überwachung der ersten Kommunikation unabhängig von zweiten Regeln zur Überwachung der zweiten Kommunikation festlegbar oder festgelegt sind. Weiterhin können die ersten Regeln zur Überwachung der ersten Kommunikation auch unabhängig von dritten Regeln zur Überwachung der dritten Kommunikation festlegbar oder festgelegt sein. Genauso können auch die zweiten Regeln zur Überwachung der zweiten Kommunikation unabhängig von den dritten Regeln zur Überwachung der dritten Kommunikation festlegbar oder festgelegt sein. Es können auch die ersten Regeln, die zweiten Regeln und auch die dritten Regeln jeweils unabhängig voneinander festgelegt sein.

Auf diese Weise kann beispielsweise erreicht werden, dass die Sicherheits-Einrichtung beispielsweise in einem ersten Schritt überprüft, welcher der genannten drei Arten von Kommunikation eine aktuell anfallende und zu überprüfende Kommunikation zugeordnet ist. Danach können dann die speziell für diese Art der Kommunikation vorgesehenen Regeln weiter verwendet werden um zu überprüfen, ob die anliegende Kommunikation zu blockieren ist oder weiterzuleiten ist. Damit lässt sich für verschiedene Kommunikationspfade jeweils ein unterschiedliches Regelwerk und unterschiedliche Zulässigkeiten festlegen, wodurch die Flexibilität der Kommunikation innerhalb eines derart vernetzten Automatisierungssystems erhöht wird.

So kann beispielsweise ein spezieller Regelsatz für eine Kommunikation zwischen dem modularen Steuerungsgerät und einer damit kommunizierenden Steuerungseinheit verwendet werden, der eine sichere Steuerung der entsprechenden Steuerungs- und gegebenenfalls Bedieneinheiten durch das modulare Steuerungsgeräts gewährleistet. Weiterhin kann eine Kommunikation zwischen einem externen Rechner und dem modularen Steuerungsgerät unabhängig davon so ausgerichtet sein, dass der Zugriff auf das modulare Steuerungsgerät gegen unberechtigte Änderungen oder Eingriffe besonders gut geschützt ist. Zum Dritten kann durch einen weiteren Regelsatz auch beispielsweise die Kommunikation eines externen Rechners direkt mit einer Steuerungseinheit z.B. in einem mit dem Netzwerkmodul verbundenen Automatisierungsnetz wieder anders reglementiert werden, um beispielsweise nur ein Auslesen von Daten aus einer Steuerungseinheit, aber nicht ein tieferer Eingriff in diese Steuerungseinheit (z.B. die Übernahme der Steuerung dieser Einheit), zulässig ist.

Weiterhin kann zur Überwachung der Kommunikation durch das Schnittstellenmodul mindestens eine Regel vorgesehen sein, die abhängig von einer mit dem Rückwandbus verbundenen Einheit des modularen Steuerungsgeräts als Absender oder Adressat ist. Solche mit dem Rückwandbus verbundenen Einheiten können beispielsweise weitere Module des modularen Steuerungsgeräts, z.B. Eingabe-Ausgabe-Baugruppen oder Stromversorgungs-Module, sein, oder auch ein zentrales Steuerungsmodul des modularen Steuerungsgeräts. Auf diese Weise können beispielsweise Überwachungsregeln davon abhängig vorgesehen sein, ob eine bestimmte Kommunikation direkt mit der Steuerungs-Zentraleinheit stattfinden soll, für welche beispielsweise ein sehr hoher Sicherheitsstandard vorgesehen sein muss, oder beispielsweise mit einer Eingabe-AusgabeBaugruppe.

Weiterhin kann zur Überwachung der Kommunikation durch das Schnittstellenmodul mindestens eine Regel vorgesehen sein, die abhängig davon ist, ob eine Kommunikation zwischen der ersten Kommunikations-Schnittstelle und der Rückwandbus-Schnittstelle oder der ersten und der zweiten Kommunikations-Schnittstelle vorliegt. So kann diesbezüglich beispielsweise geprüft werden, ob beispielsweise von einem externen Gerät über die erste Kommunikationsschnittstelle auf die modulare Steuerungseinheit selbst zugegriffen werden soll, oder direkt auf eine Steuerungseinheit, beispielsweise über ein an der zweiten Kommunikationsschnittstelle angeschlossenes Automatisierungsnetz. Die Kommunikation zwischen einem externen Rechner über die erste Kommunikations-Schnittstelle kann beispielsweise abhängig von einer Benutzer-Authentifizierung einen Eingriff in das Steuerungssystem unter bestimmten Voraussetzungen zulassen (z.B. beim Einrichten des Steuerungssystems) aber eine Kommunikation zwischen einem solchen externen Rechner und einem Steuerungsgerät im Automatisierungsnetz beispielsweise auf ein reines Auslesen eines Webservers auf einem solchen Steuerungsgerät beschränkt sein.

Weiterhin kann im Schnittstellenmodul auch mindestens eine Regel vorgesehen sein, die abhängig davon ist, ob eine Kommunikation zwischen der ersten Kommunikations-Schnittstelle und der Rückwandbus-Schnittstelle oder der zweiten Kommunikations-Schnittstelle und der Rückwandbus-Schnittstelle vorliegt. Damit können beispielsweise unterschiedliche Regeln für die Kommunikation einer an der ersten Kommunikations-Schnittstelle verbundenen Rechner und der modularen Steuerung und dem zu steuernden System beziehungsweise entsprechenden Bedieneinheiten vorgesehen sein. So kann beispielsweise die Kommunikation zwischen dem modularen Steuerungsgerät und einer zu steuernden Einheit (oder entsprechenden Bedieneinheiten) auf ein Feldbus-Protokoll, ein bestimmtes Feldbus-Protokoll (z.B. Profinet oder Profibus) oder auch auf eine "layer 2"-Kommunikation beschränkt sein, während beispielsweise bei der Kommunikation des modularen Steuerungsgeräts mit einer externen Einrichtung (z.B. einem PC in einem externen Netz) über die erste Kommunikationsschnittstelle genau solche Protokolle nicht zugelassen sind.

Es kann auch vorgesehen sein, dass das Schnittstellenmodul mindestens eine Regel umfasst, die abhängig davon ist, ob eine Kommunikation zwischen der zweiten Kommunikations-Schnittstelle und der Rückwandbus-Schnittstelle oder der ersten und der zweiten Kommunikations-Schnittstelle vorliegt. Hierbei können vorstehend bereits genannte Kommunikationsmöglichkeiten wiederum unterschieden werden. So kann beispielsweise die Kommunikation des modularen Steuerungsgeräts mit den entsprechenden Steuereinheiten wieder auf eine Feldbus- oder ähnliche Kommunikation beschränkt sein, während eine Kommunikation eines mit der ersten Kommunikationsschnittstelle verbundenen Rechners direkt mit den Steuerungseinheiten beispielsweise auf das reine Auslesen eines Webservers der Steuerungseinheit oder zumindest auf HTTP-Protokolle und/oder ein TCP/IP-Protokoll beschränkt sein können.

Wie vorstehend gesagt, kann auch eine Kombination der vorstehend genannten Regelmöglichkeiten vorgesehen sein. So kann beispielsweise mindestens eine Regel vorgesehen sein, die davon abhängig ist, ob eine erste, zweite oder dritte Kommunikation vorliegt.

Weiterhin können auch Regeln vorgesehen sein, welche unabhängig davon sind, ob eine erste, zweite oder dritte Kommunikation vorliegt (z.B. allgemeine Authentifizierung beziehungsweise Benutzerüberprüfung, Untersuchungen auf Viren und/oder Schadsoftware, Blockierung von bestimmten Absender- und/oder Empfängeradressen).

In einer weiteren Ausgestaltungsmöglichkeit kann das Schnittstellenmodul zum Einbringen in einen Modulschacht des modularen Steuerungsgeräts und/oder zum Anbringen an einer Montageschiene des modularen Steuerungsgeräts eingerichtet und ausgebildet sein. Weiterhin kann vorgesehen sein, dass bei im modularen Steuerungsgerät eingebrachtem beziehungsweise daran angebrachtem Schnittstellenmodul die Rückwandbus-Schnittstelle des Schnittstellenmoduls mit dem Rückwandbus des modularen Steuerungsgeräts verbunden ist. Insbesondere kann vorgesehen sein, dass im Rahmen des Einbring- beziehungsweise Anbring-Vorgangs der Kontakt zwischen der Rückwandbus-Schnittstelle des Schnittstellenmoduls und dem Rückwandbus des modularen Steuerungsgeräts selbsttätig hergestellt wird. Auf diese Weise lässt sich das Schnittstellenmodul besonders einfach am modularen Steuerungsgerät anbringen, da ein von der mechanischen Anbringung gesondert notwendiges Herstellen einer elektrischen Verbindung mit dem Rückwandbus dadurch vermieden werden kann.

Weitere vorteilhafte Ausgestaltungsmöglichkeiten finden sich in den Unteransprüchen.

Im Folgenden wird die vorliegende Erfindung beispielhaft mit Bezug auf die beigefügte Zeichnung näher erläutert.

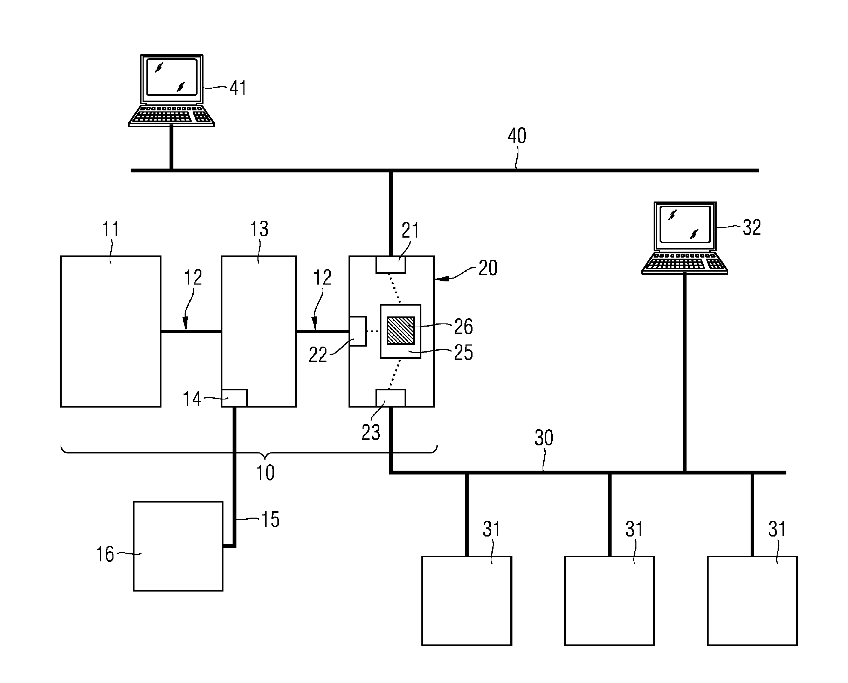

Fig. 1 zeigt eine modulare Speicherprogrammierbare Steuerung 10 (SPS), bei welche eine zentrale Steuereinheit (CPU) 11, ein Eingabe-Ausgabe-Modul 13 und ein Kommunikations-Sicherheits-Modul 20 umfasst, welche wiederum über einen Rückwandbus 12 zur Kommunikation untereinander verbunden sind. Die SPS 10 besteht dabei aus einer Basiseinheit, die den Rückwandbus 12 sowie entsprechende Steckverbinder zur Kontaktierung des Rückwandbusses 12 aufweisen. Auf dieser Basiseinheit werden dann die als Module ausgebildete CPU 11, I/O-Modul 13 sowie das Kommunikationsmodul 20 montiert, wobei bei der Montage entsprechende Steckverbinder der Module mit den Steckverbindern für den Rückwandbus 12 der Basiseinheit verbunden werden und so die CPU 11, das IO-Modul 13 sowie das Kommunikationsmodul über den Rückwandbus 12 verbunden sind.

Das IO-Modul 13 weist einen Feldbus-Anschluss 14 auf, über welchen über ein Feldbuskabel 15 (z.B. ein Profinet-Kabel), ein Sensor 16 oder Aktor 16 angeschlossen ist, welcher wiederum durch ein auf der CPU 11 ablaufendes Steuerprogramm angesteuert beziehungsweise ausgelesen werden kann. Über einen Feldbusanschluss 23 des Kommunikationsmoduls 20 und ein als Feldbusnetz (z.B. Profinet) ausgebildetes Automatisierungsnetz 30 sind weiterhin verschiedene Steuerungseinheiten 31 sowie ein Überwachungs-PC 32 mit der SPS 10 verbunden. Die Steuerungseinheiten 31 können beispielsweise als zu steuernde Maschinen oder Geräte, als Mensch-Maschine-Schnittstelle (z.B. als so genanntes "human machine interface" (HMI)), als dezentrale Zusatzsteuerungseinheit für die SPS 10 (z.B. eine so genannte "dezentrale Peripherie") oder Ähnliches ausgebildet und eingerichtet sein. Über den Überwachungs-PC 32 oder eine als HMI ausgebildete Steuerungseinheit 31 lassen sich beispielsweise aktuelle Zustände der SPS 10 auslesen oder verändern oder auch Geräte oder Maschinendaten auslesen und anzeigen oder auch ändern.

Weiterhin weist das Kommunikations-Sicherheits-Modul 20 einen externen Netzanschluss 21 für ein Ethernet-Netzwerk 40 auf, über welches ein PC 41 mit der SPS 10 verbunden ist. Dabei kann das Ethernet-Netzwerk 40 durchaus sehr ausgedehnt sein oder auch beispielsweise das Internet umfassen. Auf diese Weise kann ein räumlich durchaus sehr weit von der SPS 10 entfernt befindlicher PC 41 über das externe Netz 40 auf die SPS 10 zugreifen, um beispielsweise Daten der zentralen Steuereinheit auszulesen oder zu verändern - oder auch, um beispielsweise beim Einrichten der SPS 10 in de Programmablauf des Steuerungsprogramms eingreifen zu können. Weiterhin können über den PC 41 auch direkt Daten aus den am Feldbusnetz 23 angeschlossenen Steuerungseinheiten 31 ausgelesen werden. Solche Daten können beispielsweise das Auslesen von Webseiten oder anderen Daten von einzelnen Steuerungseinheiten 31 sein, wenn auf diesen z.B. eigene Webserver oder ähnliche Kommunikationselemente vorgesehen sind.

Um die Kommunikation im Kommunikationsmodul 20 abzuwickeln, ist darin eine Kommunikationssteuerung 25 enthalten, welche weiterhin eine Sicherheitseinrichtung 26 beziehungsweise eine "Firewall" 26 aufweist.

Über diese Firewall 26 wird jegliche durch das Kommunikationsmodul 20 hindurchgehende Kommunikation geprüft. Wenn sie den in der Firewall enthaltenen Regeln nicht genügt, wird sie blockiert. Ansonsten wird die Kommunikation zugelassen und entsprechende Nachrichten werden durchgelassen. Dabei können die Firewall-Regeln für eine Kommunikation zwischen dem externen PC 41 und der CPU 11 der SPS 10 sich von denen unterscheiden, die für eine Kommunikation der CPU 11 mit den Steuerungseinheiten 31 vorliegen. So kann beispielsweise zwischen CPU 11 und Steuerungseinheit 31 nur eine so genannte "layer 2"-Kommuniktion oder auch Feldbus-Kommunikation zugelassen sein, welche ausreicht, um die Steuerung des an die SPS 10 angeschlossenen Systems 31 zu gewährleisten. Dagegen kann für die Kommunikation zwischen dem externen PC 41 und der SPS 10 ein Authentifizierung eines Benutzers vorgesehen sein und weiterhin beispielsweise eine layer-2-Kommunikation ausgeschlossen sein, um zu verhindern, dass ein externer Benutzer des PCs 41 in den Steuerungsablauf der SPS 10 eingreifen kann. Weiterhin kann beispielsweise eine Kommunikation des externen PCs 41 mit einer Steuerungseinheit 31, beispielsweise einer Maschine 31, die einen eigenen Webserver umfasst, auf eine TCP/IP-Kommunikation oder ein HTTP-Protokoll beschränkt sein. Auf diese Weise kann im Rahmen einer solchen Kommunikation auch nicht in die Steuerungsmechanismen zwischen SPS 10 und den angeschlossenen Steuerungseinheiten 16, 31 eingegriffen werden, die typischer Weise auf tiefer liegenden Protokollschichten erfolgt.

Über diese Ausgestaltung des Kommunikations-Sicherheitsmoduls 20, und die unter Umständen von den möglichen Kommunikationspfaden abhängigen Firewall-Regeln, ist es möglich, ein möglicherweise externen Schadensquellen ausgesetztes externes Netz 40 so von einem die SPS 10 und das Automatisierungsnetz 30 umfassenden Automatisierungssystem zu trennen, dass ein im externen Netz befindlicher Nutzer durchaus den für ihn notwendigen Zugriff auf die SPS 10 sowie daran angeschlossene Steuerungseinheiten 31, 16 erhält, und trotzdem die nötigen Sicherheitskriterien eingehalten werden. Trotzdem wird durch entsprechend angepasste Firewall-Regeln aber weiterhin die Kommunikation innerhalb des Automatisierungssystems so wenig wie möglich behindert.

## Patentansprüche

1. Schnittstellenmodul (20) für ein modulares Steuerungsgerät (10), das Schnittstellenmodul (20) umfassend:
- eine Rückwandbus-Schnittstelle (22) zur Verbindung mit einem Rückwandbus (12) des modularen Steuerungsgeräts (10) zur Kommunikation innerhalb des modularen Steuerungsgeräts (10),
- eine erste Kommunikationsschnittstelle (21) zum Anschluss an ein erstes Kommunikationsnetz (40), und
- eine Sicherheits-Einrichtung (26) zur Überwachung einer ersten Kommunikation zwischen der ersten Kommunikations-Schnittstelle (21) und der Rückwandbus-Schnittstelle (22),
**dadurch gekennzeichnet**
**dass** das Schnittstellenmodul (20) weiterhin umfasst:
- eine zweite Kommunikationsschnittstelle (23) zur Kommunikation mit einer zur Kommunikation mit dem modularen Steuerungsgerät (10) vorgesehenen Steuerungseinheit (31),
wobei die Sicherheits-Einrichtung (26) weiterhin
- zur Überwachung einer zweiten Kommunikation zwischen der zweiten Kommunikations-Schnittstelle (23) und der Rückwandbus-Schnittstelle (22), und/oder
- zur Überwachung einer dritten Kommunikation zwischen der ersten (21) und der zweiten Kommunikations-Schnittstelle (23) eingerichtet und ausgebildet ist.

2. Schnittstellenmodul gemäß Anspruch 1,
**dadurch gekennzeichnet**
**dass** das Schnittstellenmodul (20) eine Speichereinrichtung umfasst und weiterhin derart eingerichtet und ausgebildet ist,
- **dass** erste Regeln zur Überwachung der ersten Kommunikation unabhängig von zweiten Regeln zur Überwachung der zweiten Kommunikation festlegbar und in der Speichereinrichtung speicherbar sind,
und/oder
- **dass** die ersten Regeln zur Überwachung der ersten Kommunikation unabhängig von dritten Regeln zur Überwachung der dritten Kommunikation festlegbar und in der Speichereinrichtung speicherbar sind,
und/oder
- **dass** die zweiten Regeln zur Überwachung der zweiten Kommunikation unabhängig von den dritten Regeln zur Überwachung der dritten Kommunikation, festlegbar und in der Speichereinrichtung speicherbar sind.

3. Schnittstellenmodul gemäß Anspruch 1 oder 2,
**dadurch gekennzeichnet**
**dass** das Schnittstellenmodul eine Speichereinrichtung umfasst, in welcher zur Überwachung der Kommunikation mindestens eine Regel gespeichert ist, die abhängig von einer mit dem Rückwandbus (12) verbundenen Einheit (11, 12, 20) des modularen Steuerungsgeräts (10) ist.

4. Schnittstellenmodul gemäß einem der Ansprüche 1 bis 3, **dadurch gekennzeichnet**
**dass** das Schnittstellenmodul (20) eine Speichereinrichtung umfasst, in welcher zur Überwachung der Kommunikation mindestens eine Regel gespeichert ist, die abhängig davon ist, ob eine Kommunikation zwischen der ersten Kommunikations-Schnittstelle (21) und der Rückwandbus-Schnittstelle (22) oder der ersten (21) und der zweiten Kommunikations-Schnittstelle (23) vorliegt.

5. Schnittstellenmodul gemäß einem der Ansprüche 1 bis 4, **dadurch gekennzeichnet**
**dass** das Schnittstellenmodul (20) eine Speichereinrichtung umfasst, in welcher zur Überwachung der Kommunikation mindestens eine Regel gespeichert ist, die abhängig davon ist, ob eine Kommunikation zwischen der ersten Kommunikations-Schnittstelle (21) und der Rückwandbus-Schnittstelle (22) oder der zweiten Kommunikations-Schnittstelle (23) und der Rückwandbus-Schnittstelle (22) vorliegt.

6. Schnittstellenmodul gemäß einem der Ansprüche 1 bis 5, **dadurch gekennzeichnet**
**dass** das Schnittstellenmodul (20) eine Speichereinrichtung umfasst, in welcher zur Überwachung der Kommunikation mindestens eine Regel gespeichert ist, die abhängig davon ist, ob eine Kommunikation zwischen der zweiten Kommunikations-Schnittstelle (23) und der Rückwandbus-Schnittstelle (22) oder der ersten (21) und der zweiten Kommunikations-Schnittstelle (23) vorliegt.

7. Schnittstellenmodul gemäß einem der Ansprüche 1 bis 6, **dadurch gekennzeichnet**
**dass** das Schnittstellenmodul (20) zum Einbringen in einen Modulschacht des modularen Steuerungsgeräts (10) und/oder zum Anbringen an einer Montageschiene des modularen Steuerungsgeräts (10) eingerichtet und ausgebildet ist,
wobei bei im modularen Steuerungsgerät (10) eingebrachten beziehungsweise daran angebrachtem Schnittstellenmodul (20) die Rückwandbus-Schnittstelle (22) des Schnittstellenmoduls (20) mit dem Rückwandbus (12) des modularen Steuerungsgeräts (10) verbunden ist, insbesondere selbsttätig mit dem Rückwandbus (12) des modularen Steuerungsgeräts (10) verbunden ist.
